# FASCICULE DE BREVET EUROPEEN

(11) **EP 2 645 870 B1**
(45) Date de publication et mention de la délivrance du brevet: **22.10.2014**
(21) Numéro de dépôt: 11788842.0
(22) Date de dépôt: 30.11.2011
(51) Int. Cl.: A23C 19/076, A23C 19/09, A23C 19/097

(54) **PROCÉDÉ DE FABRICATION D'UN PRODUIT FROMAGER SUCRÉ AYANT UN EXTRAIT SEC COMPRIS ENTRE 30% ET 60% ET COMPRENANT AU MOINS UNE CÉRÉALE**
VERFAHREN ZUR HERSTELLUNG EINER GESÜSSTEN KÄSEPRODUKT MIT TROCKENEXTRAKT ZWISCHEN 30% UND 60% UND MIT ZUMINDEST EINEM GETREIDE
PROCESS FOR PRODUCING A SWEETENED CHEESE PRODUCT HAVING A DRY EXTRACT OF BETWEEN 30% AND 60% AND COMPRISING AT LEAST ONE CEREAL

(30) Priorité: 03.12.2010 FR 1060071
(43) Date de publication de la demande: 09.10.2013
(73) Titulaire: Fromageries Bel, 75008 Paris (FR)
(72) Inventeur: CHENEVAL-PALLUD, Christophe, F-39570 Perrigny (FR)
(74) Mandataire: Blot, Philippe Robert Emile
(86) Numéro de dépôt international: PCT/EP2011/071357
(87) Numéro de publication internationale: WO 2012/072669

(56) Documents cités:
- WO-A1-2007/049981
- WO-A1-2008/054232
- WO-A2-02/051256

## Description

L'invention concerne un procédé de fabrication d'un produit laitier sucré ayant un extrait sec compris entre 30 et 60 %, composé d'une base de fromage fondu et d'au moins une céréale, ainsi qu'un produit laitier sucré susceptible d'être obtenu par ce procédé. Le produit laitier sucré se caractérise par une longue durée de conservation, c'est-à-dire une durée de conservation pouvant atteindre 4 mois hors froid.

On entend par conservation hors froid une conservation à une température ambiante comprise entre 10°et 30°C.

On connaît des produits laitiers sucrés tels que les produits fermentés sucrés type yaourts et les desserts lactés frais ; ils sont largement répandus dans le commerce. Ce sont des aliments essentiellement à base de lait conçus pour apporter les qualités nutritionnelles de base du lait sous des formes faciles à assimiler et d'une grande variété du point de vue texture, flaveur ou autres qualités organoleptiques. Cette famille de desserts lactés regroupe les desserts gélifiés, les crèmes desserts, les desserts foisonnés et les laits gélifiés aromatisés. Ils sont fabriqués à partir d'un mélange de lait pasteurisé standardisé en matière grasse, d'épaississants et/ou stabilisants (amidon et produits dérivés), d'émulsifiants et de gélifiants (gommes, carraghénanes), de sucre, d'arômes et éventuellement de colorants. Le mélange est homogénéisé et traité thermiquement (température d'environ 60°C) puis stérilisé (température d'environ 135°C pendant 2 à 4 s) pour assurer la conservation du produit ; il est ensuite refroidi à environ 75°C, puis conditionné à cette température et stocké entre 0° et 6°C pour commercialisation. Un procédé de fabrication de ces produits laitiers sucrés est décrit par exemple dans l'ouvrage de FM Luquet : « Lait et produits laitiers » tome 2 - Editions Lavoisier 1985, p. 35-43. Ces produits doivent être maintenus à une température comprise entre 0° et 6°C et consommés dans un délai assez court (conservation inférieure à 1 mois). Ces produits ont généralement un extrait sec inférieur à 30%.

Des desserts lactés de plus longue durée de conservation sont disponibles sur le marché mais ces produits ont subi un traitement de stérilisation par autoclavage (appertisation) ce qui demande des équipements spécifiques et des emballages résistant à l'autoclavage (boîte métal, pots de verre, sachets en matériau plastique adapté au traitement par autoclave). Contrairement à la technologie de fabrication des fromages fondus où le mélange est traité thermiquement avant d'être emballé à chaud, l'appertisation consiste à conditionner le produit dans un contenant hermétique et à stériliser le tout en autoclave selon des barèmes de stérilisation précis et adaptés au produit à stériliser.

Or, il serait intéressant de proposer un procédé moins contraignant que l'appertisation qui permettrait d'obtenir des produits laitiers sucrés de plus longue conservation, qui pourraient se conserver notamment hors froid pendant des périodes prolongés. Ces produits laitiers sucrés, dont la teneur en glucides serait comprise entre 20 et 25 g / 100g, seraient particulièrement intéressants, notamment pour des populations de pays ayant peu ou pas de circuit de distribution garantissant le froid.

Par ailleurs, on trouve sur le marché des produits laitiers tels que les fromages fondus proposés pour différents usages : à tartiner, à trancher, à croquer, à cuisiner, à tremper, et sous différents formats (portions triangulaires, parallélépipédiques, prismatiques, cylindriques, ou tranches, barquettes, pots, coupelles, etc.). Ces produits peuvent être natures et/ou aromatisés et éventuellement contenir des inclusions (noix, noisettes, éléments figurés, fruits, arômes à saveur sucrée, etc.).

On entend traditionnellement par « fromage fondu » les produits issus de la fonte, par traitement thermique entre 80° et 140°C, de fro mages et/ou autres produits laitiers (poudre de lait entier et/ou écrémé), concentrés protéiques laitiers, matières grasses laitières et/ou végétales, etc.

Du fait du choix des matières premières utilisées en formulation et de sa technologie de fabrication, cette catégorie de fromages présente de nombreux avantages notamment en raison de ses possibilités de conservation (jusqu'à un an), de la création d'une infinie palette de goûts et de textures, et de la bonne valeur nutritionnelle des produits adaptables aux besoins.

Dans le cadre de la présente demande le terme « fromage fondu » concernera le produit ou base fondue obtenu par le traitement thermique, à une température comprise entre 80° et 145°C, d'un mélange d'au moins une mat ière protéique d'origine laitière et d'au moins une matière grasse, d'origine animale et /ou végétale, en présence de sels de fonte et/ou d'autres agents émulsifiants et/ou texturants. De ce fait, on emploiera le terme base fondue dans la suite de la description.

Si les fromages fondus ont une valeur nutritionnelle équivalente à celle des autres fromages (fromages frais, fromages à pâte cuite, fromages à pâte pressée, fromages à pâte molle, fromages à pâte persillée, fromages à pâte filée), ils présentent néanmoins certains inconvénients, notamment leur coût, du fait du coût des matières premières entrant dans leur composition.

De plus, malgré leur bonne valeur nutritionnelle, les fromages sont essentiellement consommés dans les pays d'élevage (Europe, Russie, Amérique du Nord et Sud). Il serait cependant intéressant que les populations d'Asie et d'Afrique puissent les consommer, mais du fait de la nécessité pour ces pays de les importer ils seraient relativement onéreux, en particulier pour une partie des populations de ces pays qui ont un faible pouvoir d'achat. Par ailleurs, ces populations n'apprécient pas la typicité du goût des fromages, ce qui peut créer un rejet de leur part. De plus, les fromages présentent un déficit en glucides complexes ou polyosides, glucides recommandés par les nutritionnistes dans le cadre d'un régime alimentaire équilibré dans lequel ils devraient représenter 50% à 55 % des apports énergétiques totaux.

Le principal polyoside est l'amidon, substance de réserve chez les végétaux, en particulier dans les céréales. Il représente par exemple jusqu'à 90 % de l'extrait sec du riz.

Les principales céréales cultivées dans le monde sont le blé, le riz, le maïs, l'orge, le sorgho et le mil. Elles sont cultivées sur tous les continents, et représentent la base de la nourriture des hommes. Elles sont adaptées au climat sous lequel elles sont cultivées : blé pour des climats tempérés, riz pour des climats chauds et humides, sorgho sur des climats secs.

Elles sont consommées sous forme de graines cuites (par exemple : riz, blé, maïs) ou utilisées sous forme de farine, essentiellement transformée en différents aliments : pain issu de différentes farines, pâtes, etc.

Ainsi, le riz est la troisième céréale produite dans le monde après le maïs et le blé, et elle est la première céréale consommée et la base de l'alimentation pour plus de la moitié de la population mondiale, dont elle fournit 50 % des calories. Elle est cultivée sur les cinq continents mais la production et les échanges commerciaux sont concentrés à 90 % sur le continent asiatique.

Ces céréales sont riches en polyosides sous forme d'amidon, l'amidon étant formé de deux polymères : l'amylose et l'amylopectine. Dans les plantes cultivées et exploitées industriellement, les proportions sont de 5% à 50 % d'amylose et de 50 à 95 % d'amylopectine. Ces taux sont variables selon les espèces et dans une même espèce selon les variétés.

Les produits céréaliers ont toujours tenu un rôle important dans l'alimentation de l'enfant et de l'adulte, à la fois par leur apport énergétique et aussi notamment chez certaines populations dont ils constituent la nourriture principale par leur apport en protéines (compris entre 7 % pour le riz et 12 % pour le blé ou le sorgho). Les protéines de céréales ont une composition en acides aminés indispensables intéressante, bien qu'inférieure à celle des protéines animales du fait de leur déficit en acides aminés soufrés dont la lysine, ce qui concourt à trouver sur le marché un aliment présentant une complémentarité protéines animales/protéines végétales pour avoir un apport en quantités nécessaires de l'ensemble des acides aminés. A cet effet, une association céréales/fromage serait particulièrement appréciée.

Par ailleurs, les céréales contiennent des vitamines du groupe B (B1 ou thiamine, B2 ou riboflavine, B6 ou pyridoxine, PP ou niacine) mais sont dépourvues de vitamines A, C et D. Elles se caractérisent également par une teneur élevée en potassium (300 mg/100 g), magnésium (100-180 mg/100 g) et phosphore (300-400 mg/100 g), mais une faible teneur en calcium (20 à 60 g/100 g).

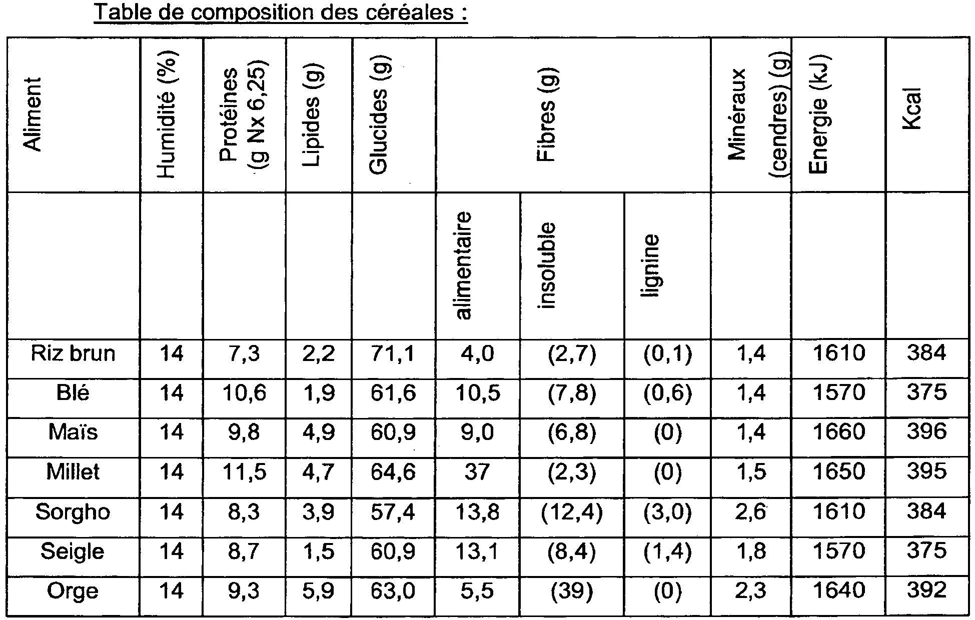

De ce qui précède, on voit donc tout l'intérêt de proposer notamment aux populations d'Asie et d'Afrique un produit composite composé d'une association fromage/céréales de bonne conservation, notamment hors froid, même sous des conditions climatiques chaudes, pratique à consommer et adapté à leur goût. Pour ce dernier aspect, on doit favoriser un produit à note gustative sucrée.

On connaît déjà des produits qui associent du fromage, dont du fromage fondu, et des céréales (essentiellement du pain), l'association pouvant se faire de façon directe ou indirecte. Ces associations ont été majoritairement réalisées dans des pays laitiers où la céréale prédominante est le blé, d'où des associations majoritairement pain ou biscuit /fromages. On peut ainsi citer comme produits d'association directe les sandwiches (qui ont une durée de vie courte, généralement inférieure à 1 semaine au froid) et des biscuits dont le fromage est apporté sous forme de poudre.

Dans le cadre d'une durée de conservation prolongée à l'état non congelé, il est très difficile d'associer ces deux types de produit du fait du transfert d'humidité entre le produit humide (fromage) et le produit sec (pain), en l'absence de couche intermédiaire de protection contre ce transfert. En effet, le produit céréalier perd son intégrité de goût et de texture. La demanderesse a d'ailleurs déposé une demande de brevet (FR 2 769 471) sur une association directe de fromage fondu et de produit céréalier, mais cette association nécessitait comme produit céréalier l'emploi exclusif de produits céréaliers de type génoise ou pain de mie, car ces deux produits céréaliers peuvent être consommés humides sans perdre leur intégrité. Toutefois, l'association était réduite à un type de produit céréalier et le produit fini était onéreux du fait du prix des matières premières.

De leur côté, les demandes de brevet internationales WO 2007/04998 et WO 2008/054232 décrivent la fabrication de produit fromager qui implique l'utilisation d'ingrédient farineux, en particulier à base de céréales et de tubercules, et plus particulièrement de riz, jusqu'à hauteur de 10 % dans des formules pour fromages fondus. L'ingrédient est incorporé sous forme d'amidon natif et/ou de farine. La demande WO 2007/04998 décrit que l'ingrédient farineux de riz possède un taux d'amylopectine inférieur à 90%. L'objectif est d'utiliser cet amidon ou cette farine pour remplacer partiellement la partie protéique des formules (caséine) afin d'obtenir des produits suffisamment fermes pour être tranchés, râpés, croqués, et pour les tranches, se détachant facilement de l'emballage (film plastique). L'amidon et /ou la farine de riz sont utilisés à des fins technologiques et non dans le but d'apporter au consommateur un produit de bonne qualité nutritionnelle. Par ailleurs, ces demandes ne mentionnent pas l'emploi, dans la formulation, de céréales cuites sous forme hydratées, en mélange avec une base de fromage fondu. Enfin, les températures maximales de traitement thermique sont limitées à 100°C pour le procédé décrit par la demande WO 2008/054232 et 85°C pour le procédé décrit par la demande WO 2007/049981. Les produits issus des procédés décrits dans ces 2 demandes de brevets ont des goûts fromagers à prédominance salée.

La demande de brevet EP 1 135 028 décrit l'utilisation de riz hydraté dans la fabrication de fromages à pâte filée de type mozzarella. A cet effet, le riz est traité thermiquement en présence d'eau sous fort cisaillement afin d'obtenir un mélange semi liquide à incorporer au fromage à pâte filée par pulvérisation du mélange eau/riz jusqu'à incorporation dans le fromage. Le fromage est alors refroidi et moulé. L'objectif est d'obtenir un fromage à pâte filée allégé, le riz se substituant à la matière grasse.

La demande de brevet US 2006/0172054 décrit la fabrication de fromages à pâte filée allégée par un autre procédé : il s'agit d'incorporer de la farine de riz dans du caillé et de traiter le mélange selon les étapes traditionnelles de fabrication de pâte filée (traitement thermique (68°-73°C), filage). La farin e de riz est employée à raison de 0,5 à 10%, préférentiellement 2% à 6%, comme substitut de matière grasse et permet d'obtenir un produit homogène et ferme.

Les demandes EP 1 135 028 et US 2006/0172054 décrivent donc l'utilisation de farine de riz ou de riz hydraté en tant que substitut de matières grasses exclusivement en technologie pâte filée avec des quantités inférieures à 10%. D'ailleurs, d'après la demande US2006/0172054, des quantités supérieures à 6% ne permettent pas d'obtenir une incorporation complète du mélange eau/riz dans le fromage

La Demanderesse a souhaité proposer des produits fromagers de bonne conservation hors froid avec des notes gustatives et aromatiques sucrées. A cet effet, dans un premier temps la Demanderesse a développé les procédés suivant (les pourcentages sont donnés en poids par rapport au poids total du produit fromager obtenu) :
- un premier procédé consistant à traiter thermiquement à une température comprise entre 100° et 140°C un mélange de matière protéique laitière (5% à 40 %), de matière grasse d'origine animale et /ou végétale (15% à 30%), d'émulsifiants (0,1% à 3 %), de sucre (5% à 15 %), de céréale sous forme de farine ou de céréale hydratée (5% à 15 %), à conditionner le mélange à 70-100°C et l e refroidir,
- un second procédé consistant à réaliser une base fondue à partir de protéines laitières (5% à 40 %), de matière grasse (15% à 30%), de sucre (5% à 15 %), et d'émulsifiants (0,1% à 3 %) et à incorporer dans cette masse fondue une céréale cuite hydratée représentant jusqu'à 60% en poids par rapport au poids total du mélange, à traiter thermiquement le mélange à une température comprise entre 100 et 140°C pendant 30 s à 6 mn, à conditionner le mélange à chaud et à refroidir le tout.

La Demanderesse a constaté que les produits fromagers obtenus présentaient des défauts bactériologiques importants, ce qui provoquait des gonflements et entraînait une mauvaise conservation du produit à températures ambiantes. La présence de sucre dans le mélange favorise le développement de bactéries résiduelles apportées essentiellement par les concentrés protéiques non stériles. Face à ce problème, la Demanderesse a alors montré que, de façon inattendue, un traitement thermique élevé associé à un pH judicieusement choisi et à une juxtaposition spécifique des étapes du procédé de fabrication permet d'éliminer des défauts bactériologiques et d'améliorer la conservation des produits.

L'invention concerne donc un procédé de fabrication d'un produit fromager sucré ayant un extrait sec compris entre 30% et 60 % et constitué par le mélange d'une base de fromage fondu sucrée, et d'au moins une céréale et le traitement dudit mélange à une température comprise entre 80°C et 145°C, de préférence entre 110°C et 145°C pendant 3 s à 6 min.

L'invention concerne également un produit fromager sucré obtenu ou susceptible d'être obtenu par ce procédé.

### Procédé de fabrication

L'invention concerne un procédé de fabrication d'un produit fromager sucré ayant un extrait sec compris entre 30 % et 60 %, de préférence compris entre 35 % et 50 %, et comprenant un mélange d'une base de fromage fondu sucrée et d'au moins une céréale, ledit procédé comprenant les étapes consistant à :
a) traiter thermiquement, à une température comprise entre 80°C et 145°C (bornes incluses) pendant 3 s à 6 min, un mélange comprenant, en poids par rapport au poids total du mélange :
   - 3 % à 40 %, de préférence 5 à 40 %, de matière protéique d'origine laitière ;
   - 10 % à 30 %, de préférence 15 à 30 %, de matière grasse ;
   - 5% à 15% de sucre;
   - 0,1 % à 3% d'émulsifiant et/ou texturant ;
   - 0,1 % à 0,5 %, de préférence plus de 0,2 % à 0,5% d'un acide ;
   - de l'eau ; et
   - 3 % à 15 %, de préférence 5 à 15 %, d'au moins une céréale exprimé en poids sec de céréale, ladite céréale étant incorporée au mélange sous forme de farine et/ou sous forme cuite hydratée;
b) conditionner à chaud le mélange traité thermiquement, à une température comprise entre 70°C et 100°C ;
c) refroidir à une température comprise entre 5°C e 115°C.

Selon un mode particulier de réalisation de ce procédé, l'apport en céréale est effectué uniquement sous forme de farine introduite directement dans la formule de la base de fromage fondu. De préférence, la farine représente 5 % à 10% en poids par rapport au poids total du mélange.

Dans le cas de ce procédé, on obtient un produit de texture plus lisse et homogène.

L'invention est aussi relative à un procédé de fabrication d'un produit fromager sucré ayant un extrait sec compris entre 30 % et 60 % et comprenant un mélange d'une base de fromage fondu sucrée et d'au moins une céréale, ledit procédé comprenant les étapes consistant à :
a) préparer une base de fromage fondu sucré par traitement thermique, à une température comprise entre 80°C et 145°C pendant 3 s à 6 min, d'un mélange comprenant, en poids par rapport au poids total du mélange :
   - 3 % à 40 %, de préférence 5 à 40 %, de matière protéique d'origine laitière ;
   - 10 % à 30%, de préférence 15 à 30 %, de matière grasse ;
   - 5% à 15% de sucre;
   - 0,1 % à 3% d'émulsifiant et/ou texturant ;
   - 0,1 % à 0,5 %, de préférence plus de 0,2 % à 0,5% d'acide ; et
   - de l'eau :
b) mélanger ladite base de fromage fondu sucrée avec au moins une céréale, ladite au moins une céréale étant incorporée au mélange sous forme de farine et/ou sous forme cuite hydratée et représentant jusqu'à 60 % en poids (hydratée) par rapport au poids total du mélange avec la base de fromage fondu ;
c) traiter thermiquement le mélange de l'étape b) à une température comprise entre 100°C et 145°C pendant 3 s à 6 min ;
d) conditionner à chaud le mélange traité thermiquement de l'étape c) à une température comprise entre 70°C et 100°C ;
e) refroidir à une température comprise entre 5°C et 15°C.

Selon un mode de réalisation de ce procédé, lorsque la céréale est sous forme cuite hydratée, le mélange peut comprendre en outre 3 à 15%, de préférence 3 % à 10%, de préférence encore 5 à 10 %, en poids par rapport au poids total du mélange, d'au moins une farine de céréale.

En outre, la céréale cuite hydratée incorporée dans la base de fromage fondu sucrée à l'étape b) aura été cuite pendant un temps et une température adaptés au type de céréale mise en oeuvre, typiquement cuisson dans l'eau bouillante ou à la vapeur à une température de 100°C à 120°C pendant 15 à 60 mi n, préférentiellement 100°C pendant 30 à 50 min, avec un rapport volume de céréale /volume d'eau adapté à chaque céréale. Par exemple, le riz peut être cuit avec un rapport 1 volume de riz / 2 à 4 volumes d'eau. Par cette opération, le volume du riz est multiplié par 2 à 4, et l'extrait sec du riz fin de cuisson est compris entre 20 à 30 %.

L'avantage des procédés ci-dessus est qu'ils peuvent permettre de retrouver dans le produit fini les grains de céréales, créant ainsi un contraste de texture originale.

Le traitement thermique de l'étape a) des procédés selon l'invention sera préférentiellement effectué à une température de 100°C à 145°C, plus préférentiellement supérieure à 115°C, ou encore de 115°C à 145°C, et plus préférentiellement encore de 140°C à 145°C.

La matière protéique d'origine laitière est sélectionnée dans le groupe constitué de poudre de lait entier, de poudre de lait écrémé, de caséines, de caséinates, de concentrés protéiques laitiers, de concentrés de protéines sériques, de fromages frais ou affinés, de caillés, de yaourts, de laits fermentés, et d'un mélange de ces matières protéiques d'origine laitière.

L'ensemble de ces matières premières est bien connu de l'homme de métier et est largement disponible sur le marché mondial. On peut citer les produits commercialisés par Fonterra, Arla Foods. Leur technologie de fabrication est également décrite dans Vignola C. : Science et Technologie du lait Ed Polytechnique de Montréal 2002*.*

On entend par « sucres » tout produit naturel utilisé pour son pouvoir sucrant. Ce terme désigne notamment le saccharose (sucre de betterave ou de canne), le glucose (sirop d'amidon) ou le fructose (sucre de fruit).

Le sucre est avantageusement du saccharose.

On peut également substituer partiellement ou totalement le sucre par des édulcorants tels que l'aspartame (E 951), la saccharine et ses sels (E 954), la thaumatine (E 957), le Lactitol (E966), le Xylitol (E967), la stévia, etc. Dans ce cas, la quantité utilisée sera fonction du pouvoir sucrant de l'édulcorant, et sera comprise entre 0 % et 5% ; les édulcorants peuvent être utilisés seuls ou en mélange.

La matière grasse est d'origine animale, d'origine végétale ou est un mélange de matières grasses d'origines animale et végétale.

Comme matières grasses animales, on peut citer la matière grasse laitière, la matière grasse laitière anhydre, le beurre, la crème. Comme matières grasses végétales, on peut citer l'huile de soja, de tournesol, de palme, palmiste, de coprah, d'arachide, de colza et toute huile végétale utilisée dans la fabrication de produits alimentaires et disponible sur le marché. L'acide est un acide alimentaire choisi notamment parmi les acide lactique, citrique ou des produits tels que la glucono-delta-lactone qui permet une acidification progressive.

Le pH du produit fromager sucré obtenu est avantageusement compris entre 5,0 et 5,6.

Les émulsifiants/texturants seront préférentiellement des sels de fonte bien connus de l'homme de métier, tels que les polyphosphates de sodium, potassium ou les citrates de sodium, potassium, mais aussi d'autres émulsifiants tels que les Datem (esters diacétyl-tartrique de mono-diglycérides, SSL et CSL (Lactylates stearoyl de sodium ou de calcium)). Ils sont utilisés seuls ou en mélange et incorporés dans la formule à une teneur comprise entre 0,1 % et 3 %, préférentiellement entre 0,5 % à 2 %.

On pourra utiliser des hydrocolloïdes tels que les carraghénanes, le guar, la caroube, la gomme xanthane, de l'amidon, l'agar-agar et tout autre texturant bien connu de l'homme de métier.

Les céréales sont ajoutées soit en même temps que les autres ingrédients dans la formule de la base de fromage fondu avant traitement thermique, soit elles sont incorporées à la base de fromage fondu chaude. Elles sont incorporées soit sous forme sèche (farine), soit sous forme hydratée après cuisson dans l'eau bouillante comme en fonction du procédé selon l'invention que l'on souhaite mettre en oeuvre. Généralement, la proportion de céréale cuite hydratée ne dépassera pas 60 % en poids par rapport au poids total du mélange avec la base de fromage fondu sucrée. De préférence, la proportion de céréale cuite hydratée sera comprise entre 15 et 50%, de préférence 30 % et 50 %, du poids total du mélange avec la base de fromage fondu. L'extrait sec de la céréale cuite hydratée est généralement compris entre 20 % et 35%, plus spécifiquement 22 %-28 %.

Dans les procédés selon l'invention, on peut utiliser un mélange de céréales, ou un mélange d'au moins une céréale avec d'autres sources végétales telles que légumineuses cultivées pour leurs graines, etc., ces dernières étant en quantité inférieure à 2% en poids sec.

Dans les procédés selon l'invention, on peut également utiliser les fruits en remplacement partiel du sucre : ainsi une partie des 5 à 15% de sucre est apportée par les fruits. Parmi les fruits utilisés on peut citer la banane, les pruneaux, le cassis, la goyave, la châtaigne, la figue et les dattes. Dans ce mode de réalisation, la proportion de fruits peut atteindre 20% en poids par rapport au poids total du mélange, de préférence de 2 à 20%, 3 à 20%, 4 à 20%, 5 à 20%, 6 à 20%, 7 à 20%, 8 à 20%, 9 à 20,%, 2 à 15%, 3 à 15%, 4 à 15%, 5 à 15%, 6 à 15%, 7 à 15%, 8 à 15%, 9 à 15,%, 2 à 10%, 3 à 10%, 4 à 10%, 5 à 10%, 6 à 10%, 7 à 10%, 8 à 10%, 9 à 10% du mélange.

Les céréales seront choisies parmi celles disponibles sur les marchés et largement consommées dans le monde tels que le blé, l'orge, le maïs, le riz ; ce dernier sera préférentiellement choisi pour son universalité de consommation, sa disponibilité mondiale et la faible teneur en amylose de certaines variétés. On peut également utiliser des céréales plus locales, telles que le quinoa (Amérique du Sud), le mil ou le sorgho (Afrique). On utilise les céréales telles que trouvées en l'état dans le commerce. Par exemple, le riz est utilisé sous forme de riz blanchi étuvé ou non (c'est-à-dire après traitement hydrothermique d'étuvage et décorticage (élimination de l'enveloppe ligneuse) ou de riz complet ou riz cargo (conservation du péricarpe). On préférera les variétés gluantes qui ont un plus faible taux d'amylose. En outre, on utilise aussi préférentiellement les céréales disponibles sur les marchés locaux où le produit sera commercialisé (riz en Asie, quinoa en Amérique du Sud, mil et sorgho en Afrique, blé en Europe, maïs en Amérique du Nord, etc.).

La céréale, qui lorsqu'elle n'est pas sous forme de farine est de préférence hydratée, est incorporée dans la base de fromage fondu en une proportion utile pour obtenir les caractéristiques nutritionnelles souhaitées du produit final, c'est-à-dire d'une composition permettant un apport en nutriments proche des recommandations de l'OMS (soit un apport en de protéines 12 %, en lipides de 33 % et en glucides de 55 % de l'énergie totale). A titre d'exemple, une formule apportant 12 % de protéines, 32-33 % de lipides et 55 % de glucides sera constituée par un mélange composé de 60 % de riz cuit (teneur en riz sec de 15 %) et 40 % de base fondue.

Préférentiellement, on choisira les céréales parmi celles qui ont un taux d'amylose inférieur à 20 %, plus spécifiquement inférieur à 10 %. Plus on recherche une texture lisse, plus le taux d'amylose doit être faible. Un taux d'amylose faible garantit une meilleure conservation de la fermeté dans le temps et une faible synérèse due à une moindre rétrogradation de l'amidon.

En jouant sur le rapport amylose/amylopectine de(s) céréale(s) utilisée(s) et sur les paramètres temps/température/vitesse de cisaillement du procédé de fabrication, on pourra obtenir toute une gamme de produits aux qualités de consistance et de textures variables.

Afin d'optimiser la valeur nutritionnelle du produit final, on peut rajouter au mélange des vitamines, des minéraux, tels que par exemple du calcium, potassium, magnésium, zinc, fer, iode, etc., sous formes solubles ou insolubles, ou des oligo-éléments.

De préférence, dans le mélange de l'étape a) des procédés selon l'invention permettant de préparer une base de fromage fondu, l'eau est en quantité suffisante jusqu'à 100% (q.s.p. 100%), c'est-à-dire que, par exemple, le mélange ne contient pas d'autres ingrédients que de la matière protéique d'origine laitière, de la matière grasse,du sucre, un ou des émulsifiants et/ou texturants, et éventuellement de la farine de céréale et/ou de légumineuse cultivée pour ses graines et vitamines et/ou minéraux.

La cuisson de la base de fromage fondu et de céréale hydratée est effectuée à une température d'au moins 80°C, de préférence supérieure à 110°C pendant quelques minutes, jusqu'à 145°C pendant quelques secondes, typiquement entre 100°C-145°C pendant 3 s à 6 min, et préférentiellement entre 110°C et 140°C pendant 1 à 6 min. Le traitement thermique est effectué sous agitation (800 à 3000 rpm, préférentiellement jusqu'à 1500 rpm) dans des équipements classiques utilisés en technologie de fromage fondu, soit des appareils de cuisson en batch de type cutter (par exemple ceux commercialisés sous marque Stephan®) ou des appareils de traitement thermique en continu de type stérilisateur UHT, ou encore des appareils de type pétrin, mélangeur, malaxeur, cuiseur-mélangeur, co-malaxeur, extrudeur.

Le mélange est ensuite refroidi à la température de conditionnement comprise entre 70°C et 100°C, de préférence entre 75°C et 95 °C, et plus préférentiellement encore entre 75°C et 90°C.

Dans les procédés selon l'invention, le produit conditionné à chaud est préférentiellement refroidi jusqu'à une température de5°C à 15°C.

Il peut se conserver jusqu'à 4 mois à température ambiante, soit entre 10°et 30°C, ou jusqu'à 1 an au froid entre 4°et 10°C.

Dans des modes de réalisation préférés de l'invention, une base de fromage fondu sucrée est réalisée à partir de concentrés protéiques en poudre (7,5 %), de 30 % d'un mélange 50/50 de matières grasse laitière et de matière grasse végétale, de 10 % de sucre (saccharose), de 1 % de polyphosphates de sodium, de préférence 0,5 % de polyphosphates de sodium, de 0,2 % d'acide lactique ou d'acide citrique et d'eau q.s.p. 100 %. La base de fromage fondu est alors mélangée à du riz sous forme de grains de riz blanchis et hydratés selon les proportions de 80 % de fromage fondu, 20 % de riz blanchi et hydraté, en poids). Le produit obtenu a un extrait sec de 40%, une teneur en protéines de 6%, en lipides de 14 % et en polyosides de 18 % (exprimé en poids sec).

### Produit fromager sucré

L'invention concerne aussi un produit fromager sucré obtenu ou susceptible d'être obtenu par un procédé selon l'invention.

Le produit fromager sucré selon l'invention présente un extrait sec compris entre 30 et 60 %, de préférence compris entre 35 % et 50%, et comprend en poids au moins 85 % de fromage fondu (si on parle en poids sec car la céréale ou le mélange de céréales représente au maximum 15 % en poids de céréale sec).

Sa composition est la suivante (les pourcentages sont donnés en poids par rapport au poids total du produit fromager) :
- matière protéique d'origine laitière : 3-40%, de préférence 5 à 40 %, de préférence encore 5 à 10% ;
- matière grasse : 10-30%, de préférence 15 à 30 % ;
- émulsifiant et/ou texturant 0,1-3% ;
- céréale : 3-15 %, de préférence 5 à 15 % ;
- sucre : 5-15 % ;
- acide : 0,1-0,5 %, de préférence plus de 0,2 % à 0,5%;
- eau : q.s.p. 100%.

De préférence, la céréale a une teneur en amylose inférieure à 20%, plus préférentiellement inférieure ou égale à 10 %.

Dans un mode de réalisation préféré, une partie des 5 à 15% de sucre est apportée par les fruits. Parmi les fruits utilisés on peut citer la banane, les pruneaux, le cassis, la goyave, la châtaigne, la figue et les dattes. Dans ce mode de réalisation, la proportion de fruits peut atteindre 20% en poids par rapport au poids total du mélange, de préférence de 2 à 20%, 3 à 20%, 4 à 20%, 5 à 20%, 6 à 20%, 7 à 20%, 8 à 20%, 9 à 20,%, 2 à 15 %, 3 à 15%, 4 à 15%, 5 à 15 %, 6 à 15%, 7 à 15%, 8 à 15%, 9 à 15, %, 2 à 10 %, 3 à 10 %, 4 à 10 %, 5 à 10 %, 6 à 10 %, 7 à 10 %, 8 à 10 %, 9 à 10 % du mélange.

On voit tout l'intérêt de ces produits laitiers sucrés de part les innombrables possibilités offertes par l'association judicieuse de matières premières laitières et céréalières tant d'un point de vue nutritionnel, que d'un point de vue goût et texture.

Le goût peut être décliné en une vaste palette adaptable à souhait au goût des populations auxquelles l'aliment est destiné, soit par le choix des matières premières, notamment laitières, soit par ajout d'arômes spécifiques à dominante sucrée (fruits, sucre, vanille, etc.).

Les produits finaux obtenus peuvent présenter des textures très variées selon l'usage de consommation souhaité : à croquer, à tartiner, à sucer, à trancher. De façon générale, le produit aura une fermeté comprise entre 20 et 200 g, de préférence entre 20 et 150 g, mesuré par un appareil Stevens. A cet effet, on utilise pour la mesure une sonde cylindrique de diamètre 6,35 mm, vitesse de 0,2 mm/s et une profondeur de 7 mm. La mesure est effectuée sur un échantillon à 20°C. Le résultat est le pic de pénétrométrie

(valeur maximale) qui traduit la fermeté du produit. Pour un produit à tartiner, cette valeur est comprise entre 40 et 50 g, de préférence entre 50 et 80 g, pour un produit à croquer elle sera supérieure à 150.

Le produit fini peut-être emballé sous différents conditionnements : pot, barquette, sachet souple, tranches, portions, dosettes, boudins, etc. Dans un même conditionnement, on peut doser des produits homogènes en goût et en texture ou doser différentes couches de produit, de goût, de texture et de couleur différente.

Un conditionnement avantageux consistera en un sachet souple en matériau étanche représentant une dose unitaire de consommation (inférieure à 100 g, de préférence inférieure à 50 g) de produit à consommer en toute occasion. L'avantage de le présenter en mono-dose réside dans la praticité et dans le fait qu'il n'y a pas de risque de recontamination après ouverture puisque la consommation est immédiate et totale. Le produit peut présenter une texture semi liquide à sucer ou ferme à croquer.

Par ailleurs, du fait du procédé utilisé (traitement thermique pouvant atteindre 145°C) et du conditionnement à chaud (70°C ou plus) , on obtient une sécurité alimentaire optimale et une durée de conservation supérieure à 3 mois, pouvant même atteindre 4 mois, à une température comprise entre 10° et 30°C, voire 1 an au froid à une température entre 4° et 10°C, du fait de l'absence d'une flore microbiologique altérant le produit.

Que ce soit par le choix des matières premières et ingrédients d'origine, qui permettent d'obtenir une infinie palette de goûts et de textures, par le procédé de fabrication et de conditionnement choisi, le nouveau produit selon l'invention est de toutes les façons un produit adapté, adaptable et façonnable à tous les consommateurs et à toutes les cultures. Il est adapté à tous les modes de consommation car il ne se positionne pas dans un cadre précis étant adaptable à tout lieu et à toute façon de le consommer : à la maison, à l'école, en restauration collective ou dans la rue.

Le produit fromager sucré selon l'invention apporte tous les macronutriments nécessaires à la nutrition humaine, protéines, lipides et glucides dans un rapport proche des apports nutritionnels conseillés par l'OMS (Organisation Mondiale de la Santé). Les apports nutritionnels en macronutriments conseillés par l'OMS sont (exprimés en % de l'apport énergétique total) :
- apport en protéines : 12%
- apport en lipides : 33%
- apport en glucides dont glucides simples (10 à 15%) et complexes : 55%.

L'invention est également illustrée par les exemples suivants qui n'en limitent pas la portée.

### EXEMPLES:

### Exemple 1 :

On réalise des produits selon les 4 formules présentées dans le tableau ci-dessous.

| | **A** | **B** | **C** | **D** |
|---|---|---|---|---|
| **Matières premières et additifs** | % | % | % | % |
| Beurre | 19,1 | 23,2 | | |
| Matière Grasse Végétale | | | 15,7 | 22,4 |
| Riz | 5 | 8 | 10 | 12 |
| Caséine acide | | 2,54 | | |
| Poudre de lait 0% | 6 | | 14,8 | |
| concentré de protéines laitières (70 % de teneur protéique) | 3,3 | | | 11,0 |
| Concentré de protéines laitières (80 %de protéines laitières) | | 2,7 | | |
| Sucre (saccharose du commerce) | 9 | 10 | 5 | |
| Edulcorant (aspartame) | | | 0,5 | 1 |
| Arôme | 0,2 | 0,3 | 0,4 | 0,5 |
| Sels de fonte | 0,5 | 1 | 1 | 1,5 |
| Acide citrique | 0,2 | 0,2 | 0,25 | 0,15 |
| Carraghenanes ACH 121 | 0,3 | 0,25 | 0,25 | 0,2 |
| Xanthane Rhodigel 200 | 0,2 | 0,2 | 0,2 | 0,1 |
| Eau | 56,2 (dont 30% eau de cuisson du riz) | 51,61 (dont 30% eau de cuisson du riz) | 51,9 (dont 30%eau de cuisson du riz) | 51.15 (dont 30% eau de cuisson du riz) |
| TOTAL | 100,00 | 100,00 | 100,00 | 100,00 |

Les produits A et B sont réalisés selon le procédé suivant :
- Préparation d'un mélange constitué dans les proportions indiquées par le tableau d'une source protéique (concentrés protéiques laitiers), de matière grasse, de sucre (saccharose), de sels de fonte, de carraghénanes, de gomme xanthane, de riz préalablement cuit dans les conditions suivantes : cuisson de 10 g de riz sec (pour 100 g de produit) dans 30 g d'eau à 100°C pendant 50 mn dans l'eau dans un rapport de 1 volume de riz pour 3 volumes d'eau et d'eau (complément à 100%) ; la quantité de riz est respectivement de 5 et 8 % ;
- Traitement thermique du mélange sous agitation (1000 rpm) à 145°C pendant 3 s ;
- Refroidissement du mélange à 80°C et conditionnement à chaud dans un sachet souple contenant 30 g de produit ;
- Refroidissement jusqu'à 10°C.

Dans les produits C et D, le sucre a été partiellement ou totalement remplacé par un édulcorant selon les proportions indiquées et la quantité de riz est respectivement de 10 et 12%.

Les produits C et D sont réalisés selon le procédé suivant :
- Mélange des ingrédients des formules selon les proportions indiquées dans le tableau 1 avec le riz préalablement cuit selon les conditions de traitement identiques aux produits A et B puis traitement thermique sous agitation (1000 rpm) à 100°C pendant 2 mn dudit mélange.
   La cuisson s'effectue dans un cutter commercialisé par la Société Stephan.
- Refroidissement jusqu'à 80°C et conditionnement à cette température dans des micro-barquettes de 10 g.
- Refroidissement jusqu'à 10°C.

Le tableau ci-dessous donne les caractéristiques de composition des produits A, B, C et D.

| | | **A** | **B** | **C** | **D** |
|---|---|---|---|---|---|
| % | Extrait sec | 40 | 43 | 45 | 45 |
| % | Gras / sec | 40 | 45 | 35 | 50 |
| % | Matière grasse | 16 | 19,35 | 15,75 | 22,5 |
| % | Protéine | 4,90 | 5,12 | 5,99 | 8,58 |
| % | Glucides | 16,59 | 16,45 | 20,58 | 11,48 |
| % | Lactose | 3,77 | 0,25 | 7,68 | 1,88 |
| % | Calcium | 0,14 | 0,07 | 0,18 | 0,22 |

Les produits A et B ont un pH de 5,60, alors que les produits C et D ont un pH de 5,45.

Les produits C et D obtenus ont une fermeté mesurée au Stevens de 150 g et une durée de conservation de 6 mois à 10°C. Ils sont destinés à une consommation du type « à croquer ».

Les produits A et B sont des produits à tartiner. Ils ont une valeur Stevens de 60 g et une durée de conservation de 6 mois à température ambiante.

### Exemple 2 :

On prépare un mélange constitué, dans les proportions indiqués sur le tableau ci-dessous, d'une source protéique (concentrés protéiques laitiers = MPC80 + poudre de lait), de matière grasse (beurre), de sucre (saccharose), de céréales (riz hydraté selon conditions de l'exemple 1), de fruits (banane sous forme de purée de banane), de sels de fonte, de carraghénanes, de gomme xanthane et d'eau (complément à 100 %).

On réalise un traitement thermique du mélange sous agitation (1000rpm) à 115°C pendant 3 s.

Le mélange est ensuite refroidi jusqu'à 80°C et con ditionné sous sachet plastique souple contenant 25 g de produit.

Le produit conditionné est alors refroidi à 10°C.

Le tableau ci-dessous donne les caractéristiques de composition du produit.

| | |
|---|---|
| Extrait sec | 40 |
| Gras /sec | 30 |
| Matière grasse | 12 |
| Protéine | 8.00 |
| Calcium (%) | 0.60 |
| Glucides | 16.50 |
| Lactose | 5.20 |
| | |

| **Matière** | **%** |
|---|---|
| Beurre | 14,4 |
| Riz | 3 |
| Poudre de lait (0% MG) | 10.3 |
| MPC 80 | 5 |
| Sucre | 5 |
| Banane | 20 |
| Sels de fonte | 0.5 |
| Acide citrique | 0.2 |
| Carraghénanes | 0.5 |
| Xanthane | 0.1 |
| Eau | 41.0 |
| Total | 100.0 |

Le produit a une fermeté mesurée au Stevens de 150 g et une durée de conservation à 5-10°C de 6 mois.

## Revendications

1. Procédé de fabrication d'un produit fromager sucré ayant un extrait sec compris entre 30 % et 60 % et comprenant un mélange d'une base de fromage fondu et d'au moins une céréale, ledit procédé comprenant les étapes consistant à :
a) traiter thermiquement, à une température comprise entre 80°C et 145°C pendant 3 s à 6 min, un mélange comprenant, en poids par rapport au poids total du mélange :
- 3 % à 40% de matière protéique d'origine laitière ;
- 10 % à 30% de matière grasse ;
- 5% à 15% de sucre;
- 0,1 % à 3% d'émulsifiant et/ou texturant ;
- 0,1 % à 0,5 % d'un acide ;
- de l'eau ; et
- 3% à 15% d'au moins une céréale, ladite céréale étant incorporée au mélange sous forme de farine et/ou sous forme cuite hydratée;
b) conditionner à chaud le mélange traité thermiquement, à une température comprise entre 70°C et 100°C ;
c) refroidir à une température comprise entre 5°C et 15°C.

2. Procédé selon la revendication 1, **caractérisé en ce que** ladite au moins une céréale est incorporée sous forme de farine de céréale et représente 5 % à 10% en poids par rapport au poids total du mélange de l'étape a).

3. Procédé de fabrication d'un produit fromager sucré ayant un extrait sec compris entre 30 % et 60 % et comprenant un mélange d'une base de fromage fondu sucrée et d'au moins une céréale, ledit procédé comprenant les étapes consistant à :
a) préparer une base de fromage fondu sucré par traitement thermique, à une température comprise entre 80°C et 145°C pendant 3 s à 6 min, d'un mélange comprenant, en poids par rapport au poids total du mélange :
- 3 % à 40% de matière protéique d'origine laitière ;
- 10 % à 30% de matière grasse ;
- 0,1 % à 3% d'émulsifiant et/ou texturant ;
- 5 % à 15% de sucre;
- 0,1 % à 0,5 % d'acide ; et
- de l'eau ;
b) mélanger ladite base de fromage fondu avec au moins une céréale, ladite au moins une céréale étant incorporée au mélange sous forme de farine et/ou sous forme cuite hydratée et représentant jusqu'à 60% en poids par rapport au poids total du mélange avec la base de fromage fondu ;
c) traiter thermiquement le mélange de l'étape b) à une température comprise entre 100°C et 145°C pendant 3 s à 6 min ;
d) conditionner à chaud le mélange traité thermiquement de l'étape c) à une température comprise entre 70°C et 100°C ;
e) refroidir à une température comprise entre 5°C et 15°C.

4. Procédé selon la revendication 3, dans lequel le mélange de l'étape a) comprend en outre 3 % à 15%, en poids par rapport au poids total du mélange, d'au moins une farine de céréale.

5. Procédé selon la revendication 1 ou 3, dans lequel ladite au moins une céréale cuite hydratée présente un extrait sec compris entre 20 % et 35%.

6. Procédé selon l'une quelconque des revendications 1 à 5, dans lequel ladite au moins une céréale est sélectionnée dans le groupe constitué de riz, blé, orge, maïs, mil, sorgho, et quinoa.

7. Procédé selon l'une quelconque des revendications 1 à 6, dans lequel le produit fromager sucré ayant un extrait sec compris entre 30 % et 60% comprend un mélange de céréales.

8. Procédé selon l'une quelconque des revendications 1 à 7, dans lequel ladite au moins une céréale a un taux d'amylose inférieur ou égale à 10%.

9. Procédé selon l'une quelconque des revendications 1 à 8, dans lequel ladite matière protéique d'origine laitière est sélectionnée dans le groupe constitué de poudre de lait entier, de poudre de lait écrémé, de caséines, de caséinates, de concentrés protéiques laitiers, de concentrés de protéines sériques, de fromages frais ou affinés, de caillés, de yaourts, de laits fermentés, et d'un mélange de ces matières protéiques d'origine laitière.

10. Procédé selon l'une quelconque des revendications 1 à 9, dans lequel ladite matière grasse est d'origine animale, d'origine végétale ou est un mélange de matières grasses d'origines animale et végétale.

11. Procédé selon l'une quelconque des revendications 1 à 10, dans lequel une partie des 5 à 15% de sucre est remplacée par des fruits.

12. Procédé selon la revendication 11, dans lequel les fruits sont choisis parmi la banane, les pruneaux, le cassis, la goyave, la châtaigne, la figue et les dattes.

13. Produit fromager sucré ayant un extrait sec compris entre 30 et 60 % et comprenant en poids par rapport au poids total du produit fromager sucré) :
- 3-40% de matière protéique d'origine laitière ;
- 10-30% de matière grasse ;
- 0,1-3% d'émulsifiant ou texturant ;
- 3-15 % de céréale;
- 5-15 % de sucre ;
- 0,1-0,5 % de acide alimentaire ; et
- eau : q.s.p. 100%.

14. Produit fromager sucré ayant un extrait sec compris entre 30 et 60 % et comprenant au moins une céréale, susceptible d'être obtenu par un procédé selon les revendications 1 à 12.

## Patentansprüche

1. Verfahren zur Herstellung eines gesüßten Käseprodukts, das einen Trockenextrakt zwischen 30 % und 60 % inklusive hat und eine Mischung aus einer Schmelzkäsebasis und aus mindestens einem Getreide umfasst, wobei das Verfahren die folgenden Schritte umfasst:
a) thermisches Behandeln bei einer Temperatur zwischen 80 °C und 145 °C inklusive während 3 s bis 6 min. einer Mischung, die in Gewicht im Verhältnis zum Gesamtgewicht der Mischung umfasst:
- 3 % bis 40 % Milcheiweiß,
- 10% bis 30 % Fett,
- 5 % bis 15 % Zucker,
- 0,1 % bis 3 % Emulgator und/oder Strukturfestiger,
- 0,1 % bis 0,5 % einer Säure,
- Wasser und
- 3 % bis 15 % mindestens eines Getreides, wobei das Getreide in die Mischung in Form von Mehl und/oder in gekochter und hydratisierter Form eingearbeitet ist,
b) Warmkonditionieren der thermisch behandelten Mischung bei einer Temperatur zwischen 70 °C und 100 °C inklusive,
c) Abkühlen auf eine Temperatur zwischen 5 °C und 15 °C inklusive.

2. Verfahren nach Anspruch 1, **dadurch gekennzeichnet, dass** das mindestens eine Getreide in Form von Getreidemehl eingearbeitet wird und 5 bis 10 Gew.-% im Verhältnis zum Gesamtgewicht der Mischung von Schritt a) darstellt.

3. Verfahren zur Herstellung eines gesüßten Käseprodukts, das einen Trockenextrakt zwischen 30 % und 60 % inklusive hat und eine Mischung aus einer gesüßten Schmelzkäsebasis und aus mindestens einem Getreide umfasst, wobei das Verfahren die folgenden Schritte umfasst:
a) Zubereiten einer gesüßten Schmelzkäsebasis durch thermisches Behandeln bei einer Temperatur zwischen 80 °C und 145 °C inklusive während 3 s bis 6 min. einer Mischung, die in Gewicht im Verhältnis zum Gesamtgewicht der Mischung umfasst:
- 3 % bis 40 % Milcheiweiß,
- 10% bis 30 % Fett,
- 0,1 % bis 3 % Emulgator und/oder Strukturfestiger,
- 5 % bis 15 % Zucker,
- 0,1 % bis 0,5% Säure und
- Wasser,
b) Mischen der Schmelzkäsebasis mit mindestens einem Getreide, wobei das mindestens eine Getreide in die Mischung in Form von Mehl und/oder in gekochter und hydratisierter Form eingearbeitet wird und bis 60 Gew.-% im Verhältnis zum Gesamtgewicht der Mischung mit der Schmelzkäsebasis darstellt,
c) thermisches Behandeln der Mischung von Schritt b) bei einer Temperatur zwischen 100 °C und 145 °C inklusive während 3 s bis 6 min.,
b) Warmkonditionieren der thermisch behandelten Mischung von Schritt c) bei einer Temperatur zwischen 70 °C und 100 °C inklusive,
c) Abkühlen auf eine Temperatur zwischen 5 °C und 15 °C inklusive.

4. Verfahren nach Anspruch 3, wobei die Mischung von Schritt a) ferner 3 bis 15 Gew.-% im Verhältnis zum Gesamtgewicht der Mischung mindestens eines Getreidemehls umfasst.

5. Verfahren nach Anspruch 1 oder 3, wobei das mindestens eine gekochte und hydratisierte Getreide einen Trockenextrakt zwischen 20 % und 35 % inklusive aufweist.

6. Verfahren nach einem der Ansprüche 1 bis 5, wobei das mindestens eine Getreide aus der Gruppe ausgewählt ist, die von Reis, Weizen, Gerste, Mais, Hirse, Sorgho und Quinoa gebildet wird.

7. Verfahren nach einem der Ansprüche 1 bis 6, wobei das gesüßte Käseprodukt, das einen Trockenextrakt zwischen 30 % und 60 % inklusive hat, eine Getreidemischung umfasst.

8. Verfahren nach einem der Ansprüche 1 bis 7, wobei das mindestens eine Getreide einen Amylosegehalt von unter oder gleich 10 % hat.

9. Verfahren nach einem der Ansprüche 1 bis 8, wobei das Milcheiweiß aus der Gruppe ausgewählt ist, die von Vollmilchpulver, Magermilchpulver, Kaseinen, Kaseinaten, Milcheiweißkonzentraten, Serumproteinkonzentraten, Frisch- oder gereiften Käsen, Bruch, Joghurts, fermentierter Milch und einer Mischung dieser Milcheiweiße gebildet wird.

10. Verfahren nach einem der Ansprüche 1 bis 9, wobei das Fett tierischen Ursprungs, pflanzlichen Ursprungs oder eine Mischung von Tier- und Pflanzenfetten ist.

11. Verfahren nach einem der Ansprüche 1 bis 10, wobei ein Teil der 5 bis 15 % Zucker durch Früchte ersetzt wird.

12. Verfahren nach Anspruch 11, wobei die Früchte aus der Banane, den Backpflaumen, den Schwarzen Johannisbeeren, der Guayave, der Kastanie, der Feige und den Datteln ausgewählt sind.

13. Gesüßtes Käseprodukt, das einen Trockenextrakt zwischen 30 und 60 % inklusive hat und in Gewicht im Verhältnis zum Gesamtgewicht des gesüßten Käseprodukts umfasst:
- 3-40 % Milcheiweiß,
- 10-30 % Fett,
- 0,1-3 % Emulgator oder Strukturfestiger,
- 3-15 % Getreide,
- 5-15 % Zucker,
- 0,1-0,5 % Lebensmittelsäure und
- Wasser: q.s.p. 100 %.

14. Gesüßtes Käseprodukt, das einen Trockenextrakt zwischen 30 und 60 % inklusive hat und mindestens ein Getreide umfasst, das durch ein Verfahren nach den Ansprüchen 1 bis 12 herstellbar ist.

## Claims

1. A method for producing a sweet cheese product having a dry extract between 30 and 60 % and comprising a mixture of a melted cheese base and at least one cereal, comprising the following steps:
a) heat treatment at a temperature between 80 and 145 °C for 3 s to 6 min, of a mixture comprising, by weight of the total weight of the mixture:
- 3 - 40 % dairy protein;
- 10 - 30% fat;
- 5 - 15% sugar;
- 0.1 - 3 % emulsifier and/or texturing agent;
- 0.1 - 0.5 % of an acid;
- water, and
- 3 - 15% of at least one cereal, the cereal being included in the mixture in the form of flour and/or in cooked and hydrated form;
b) hot packaging of the heat-treated mixture at a temperature between 70 and 100 °C;
c) cooling to a temperature between 5 and 15°C.

2. A Method according to claim 1, **characterised in that** the at least one cereal is included in the form of cereal flour and represents 5 - 10 % by weight of the total weight of the mixture of step a).

3. A method for producing a sweet cheese product having a dry extract between 30 and 60 % and comprising a mixture of a sweet melted cheese base and at least one cereal, comprising the following steps:
a) preparing a sweetened melted cheese base by heat treatment at a temperature between 80 - 145°C for 3 s to 6 min, of a mixturecomprising, by weight of the total weight of the mixture:
- 3 - 40 % dairy protein;
- 10 - 30% fat;
- 0.1 - 3 % emulsifier and/or texturing agent;
- 5 - 15 % sugar;
- 0.1 - 0.5 % of an acid; and
- water;
b) mixing the melted cheese base with at least one cereal, the at least one cereal being included in the mixture in the form of flour and/or in cooked and hydrated form and representing up to 60% by weight of the total weight of the mixture with the melted cheese base;
c) heat treatment of the mixture from step b) at a temperature between 100 and 145 °C for 3 s to 6 min;
d) hot packaging of the mixture heat-treated in step c) at a temperature between 70 and 100 °C;
e) cooling to a temperature between 5 and 15°C.

4. A method according to claim 3, in which the mixture of step a) further comprises 3 to 15 %, by weight of the total weight of the mixture, of at least one cereal flour.

5. A method according to claim 1 or 3, in which the at least one cooked hydrated cereal has a dry extract between 20 and 35 %.

6. A method according to any of claims 1 to 5, in which the at least one cereal is selected from the group consisting in rice, wheat, barley, maize, millet, sorghum, and quinoa.

7. A method according to any of claims 1 to 6, in which the sweet cheese product having a dry extract between 30 and 60% comprises a mixture of cereals.

8. A method according to any of claims 1 to 7, in which the at least one cereal has an amylose content less than or equal to 10 %.

9. A method according to any of claims 1 to 8, in which the dairy protein is selected from the group consisting in whole milk powder, skim milk powder, caseins, caseinates, milk protein concentrates, serum protein concentrates, fresh or ripened cheeses, curds, yoghurts, fermented milks, and a mixture of these dairy proteins.

10. A method according to any of claims 1 to 9, in which the fat is of animal or vegetable origin, or is a mixture of fats of vegetable and animal origin.

11. A method according to any of claims 1 to 10, in which part of the 5 - 15 % sugar is replaced by fruits.

12. A method according to claim 11, in which the fruits are chosen from bananas, prunes, black currants, guava, chestnuts, figs, and dates.

13. A sweet cheese product having a dry extract between 30 and 60 %, and comprising by weight of the total weight of the sweetened cheese product:
- 3 - 40 % dairy protein;
- 10 - 30% fat;
- 0.1 - 3 % emulsifier and/or texturing agent;
- 3 - 15% cereal;
- 5 - 15 % sugar;
- 0.1 - 0.5 % food acid; and
- water: Sufficient for 100%

14. A sweet cheese product having a dry extract between 30 and 60 %, comprising at least one cereal, obtainable by a method according to claims 1 - 12.
